# EUROPÄISCHE PATENTSCHRIFT

(11) **EP 2 722 641 B1**
(45) Veröffentlichungstag und Bekanntmachung des Hinweises auf die Patenterteilung: **27.07.2016**
(21) Anmeldenummer: 12000619.2
(22) Anmeldetag: 31.01.2012
(51) Int. Cl.: G01B 11/24

(54) **Vorrichtung zum Erfassen der Umrisse von Gegenständen und Bauteilen**
Device for detecting the contours of objects and components
Dispositif de détection des contours d'objets et composants

(30) Priorität: 01.02.2011 DE 102011009983
(43) Veröffentlichungstag der Anmeldung: 23.04.2014
(73) Patentinhaber: FM Systeme Förder-und Montagetechnik Schmalzhofer GmbH, 75031 Eppingen (DE)
(72) Erfinder: Margolf, Andreas, 70825 Korntal-Münchingen (DE)
(74) Vertreter: Schmid, Barbara

(56) Entgegenhaltungen:
- DE-A1- 3 804 743
- DE-A1- 19 805 040
- DE-A1- 19 938 885
- DE-A1-102004 007 446
- DE-A1-102004 058 655
- DE-C1- 4 415 659
- DE-C1- 4 442 787

## Beschreibung

Die vorliegende Erfindung betrifft eine Vorrichtung zum Erfassen der Umrisse von Gegenständen, wie Messmittel und Werkzeuge, zum Herstellen von Shadowboards oder Einlagen, auf den die Außenkonturen die Messmittel und Werkzeuge ausgeschnitten sind, so dass sich Vertiefungen ergeben, in welche die Gegenstände passgenau eingesetzt werden können, umfassend eine transparente Auflagefläche, eine digitale Kamera, die auf die Auflagefläche gerichtet ist, und einer Lichtquelle zum Beleuchten der Auflagefläche, wobei die Lichtquelle und die digitale Kamera auf entgegengesetzten Seiten oder auf der gleichen Seite der Auflagefläche angeordnet sind.

In Werkzeugschränken oder anderen Betriebseinrichtungen sollen Messmittel und Werkzeuge ordentlich und übersichtlich gelagert werden. Dazu erstellt man sogenannte Shadowboards oder Einlagen zum Beispiel aus Schaumstoff. Im Zusammenhang mit der Erfindung werden die Begriffe "Shadowboard" und "Einlage" synonym gebraucht.

Im Zusammenhang mit der beanspruchten Erfindung wird nachfolgend der Begriff "Digitalkamera" für alle Einrichtungen gebraucht, die ein digitales Bild, sei es schwarz-weiß oder farbig, von einer zu der Digitalkamera beabstandet angeordneten Fläche machen kann. So wird zum Beispiel ein CCD-Sensor mit oder ohne Objektiv als Digitalkamera im Sinne der Erfindung betrachtet.

Um für eine bestimmte Kombination von Gegenständen, wie zum Beispiel Messmittel und/oder Werkzeuge, ein Shadowboard oder eine Einlage herzustellen, werden die Außenkonturen dieser Gegenstände aus dem Schaumstoff ausgeschnitten wurden, so dass sich Vertiefungen ergeben, in welche die Gegenstände passgenau eingelegt werden können. Um individuelle, auf die Wünsche des Nutzers abgestimmte Shadowboards herstellen zu können, ist es bislang erforderlich, die Umrisse der Gegenstände von Hand, beispielsweise mit einem Teppichmesser, aus einer Schaumstoffplatte auszuschneiden.

Wenn das Shadowboard oder die Einlage aus einem festeren Werkstoff, wie zum Beispiel Holz oder Kunststoff, Hartkernplatten oder anderen Materialien, hergestellt werden soll, müssen die Umrisse der Werkzeuge durch einen Fingerfräser aus den Platten herausgefräst oder auf andere Art und Weise entfernt werden. Wenn man dies von Hand macht, benötigt man sehr viel Zeit und infolgedessen ist diese Verfahrensweise unwirtschaftlich.

Die DE 44 15 659 C1 offenbart eine Vorrichtung und Verfahren zur Herstellung von Gegenständen auf der Grundlage von Daten, die aus einer optischen Erfassung eines Objekts ermittelt werden. Das Objekt ist auf einer Glasplatte angeordnet, das von einem Projektor beleuchtet wird, wobei mindestens eine digitale Kamera auf das Objekt beziehungsweise die Auflagefläche (über einen Spiegel) gerichtet ist. Bei dieser Vorrichtung geht es um die Erfassung der dreidimensionalen Struktur des Gegenstands.

Die DE 10 2004 058 655 A1 offenbart ein Verfahren und eine Anordnung zum Messen von Geometrien eines Objektes mittels eines Koordinatenmessgerätes, wobei zweidimensionale Geometrien erfasst werden und eine CCD-Kamera im Rahmen einer Bildverarbeitungssensorik eingesetzt wird, wobei die Kamera vorgegebene Aufnahmepositionen anfährt. Des Weiteren ist eine Beleuchtungseinrichtung vorhanden.

Die DE 199 38 885 A1 offenbart eine optische Einrichtung zur Bildaufnahme von zweidimensionalen Profilkonturen. Dabei wird eine Optik bzw. Kamera eingesetzt, die beabstandet zu einer Auflage angeordnet ist, auf der der zu erfassende Gegenstand mit seiner Profilkontur unmittelbar aufliegt. Die Auflage ist dabei aus einem transparenten Werkstoff hergestellt.

Die DE 198 05 040 A1 offenbart eine Durchlichtbeleuchtung für Koordinatenmessmaschinen. Dabei wird ein Messobjekt auf einer durchsichtigen Auflage gelagert, wobei eine Beleuchtungsquelle auf einer Seite der Auflage und eine optische Messeinheit auf der anderen Seite der Auflage vorhanden ist.

Schließlich zeigt die DE 44 42 787 C1 eine Vorrichtung zum Erfassen der Koordinaten (Umrisse von Messgegenständen), bei dem ein selbstleuchtendes Element eingesetzt wird, auf das das Messobjekt aufzulegen ist, wobei eine Maßverkörperung eines fotoelektrischen Messsystems durch das selbstleuchtende Element mit Durchlicht beleuchtbar ist und eine optoelektrische Abtast- oder Auswertvorrichtung zur Abtastung vorhanden ist. Dabei besteht das selbstleuchtende Element aus einer Glasplatte, die mit mindestens einer Licht aussendenden Folie belegt ist.

Die DE 10 2004 007 446 A1 offenbart ein Verfahren zur detailgetreuen Umsetzung der Abmessung eines dreidimensionalen Körpers in ein massstäbliches Modell, wobei die Geometriedaten des Körpers durch berührungs- und verlustfreies Abtasten über Distanzmessgeräte in einer Vielzahl von Punkten festgestellt und digitalisiert wird und diese Daten einem Rechner als 3D-Daten zur Weiterverarbeitung zugeführt werden.

Die DE 38 04 743 A1 offenbart eine Anordnung zum Herstellen von Werkstücken, deren Positions- und Abmessungsdaten als Werkstückdaten in einem Speichermedium abgelegt sind, die anschließend einer numerischen Steuerung zugeführt werden, wobei die Positionierbewegungen mit Korrekturbewegungen in spezieller Art und Weise verlagert werden.

Der Erfindung liegt die Aufgabe zugrunde, eine Vorrichtung bereitzustellen, welche die rationelle Herstellung von Shadowboards und diversen Einlagen bei gleichzeitiger Verbesserung der Qualität der Einlagen ermöglicht. Rationell bedeutet dabei, dass die Herstellungskosten, der Zeitbedarf zur Herstellung der Einlagen und die Anforderungen an die mit der Herstellung betrauten Personen reduziert werden. Außerdem sollen Einlagen aus verschiedensten Werkstoffen herstellbar sein.

Diese Aufgabe wird erfindungsgemäß gelöst durch eine Vorrichtung der eingangs genannten Art zum Erfassen der Umrisse von Bauteilen und Gegenstände, die sich dadurch auszeichnet, dass mehrere, bevorzugt 2,4 oder 6, digitale Kameras nebeneinander angeordnet sind, und dass die Bildausschnitte der Kameras aneinander anschließen oder sich teilweise überlappen, die transparente Auflagefläche, die Lichtquelle und die digitalen Kameras in einem gemeinsamen mobilen Gestell angeordnet sind, das Gestell teilweise teleskopierbar ist, so dass der Abstand zwischen der transparenten Auflagefläche und den digitalen Kameras veränderbar ist, wobei die Vorrichtung zusätzlich so ausgebildet ist, dass die Kameras Bilder von Segmenten der Auflagefläche erstellen, und dass diese Bilder zu einem Gesamt-Bild der Auflagefläche zusammengesetzt werden, die Hell-Dunkel-Grenzen des oder der Bilder von der Auflagefläche mit darauf liegenden Gegenständen so vektorisiert werden, dass sich ein geschlossener Kurvenzug für jeden auf der Auflagefläche befindlichen Gegenstand ergibt, die vektorisierten geschlossenen Kurvenzüge in eine Bahnsteuerung für eine Bearbeitungseinrichtung, bevorzugt eine Fräseinrichtung oder einen Plotter, umgesetzt werden.

Mit Hilfe der erfindungsgemäßen Vorrichtung ist es möglich, die Gegenstände, die später zum Beispiel in der Schublade eines Werkzeugschrankes nebeneinander geordnet liegen sollen, in der Position, die sie später in der Schublade einnehmen sollen oder in der Verpackung, z. B. Besteckkoffer, nebeneinander auf die Auflagefläche zu legen und die Umrisse der Gegenstände auf die Auflagefläche zu projizieren.

Die erfindungsgemäße Vorrichtung erlaubt es, die Umrisse der Gegenstände automatisch durch eine geeignete Auswertung der von den Kameras aufgenommenen Bilder zu erfassen und in ein Steuerprogramm für eine NC-gesteuerte Fräsmaschine oder eine andere NC-gesteuerte Werkzeugmaschine umzusetzen.

Die Qualität der digitalen Bilder wird verbessert durch die vorgesehene Lichtquelle, welche die Auflagefläche von der der Digitalkamera entgegengesetzten Seite durchleuchtet. Alternativ kann die mindestens eine Lichtquelle als Auflichtquelle dienen, dann ist sie auf der gleichen Seite wie die Digitalkamera angeordnet. In diesem Fall kann die Auflagefläche auch opak sein.

In beiden Fällen ergeben sich ergeben sich signifikante Helligkeits- und/oder Farbunterschiede zwischen den Bereichen der Auflagefläche, auf denen ein Gegenstand liegt, und den anderen Bereichen der Auflagefläche. Dort wo kein Gegenstand liegt, dringt Licht durch die Auflagefläche und infolgedessen stellen sich diese Bereiche für die digitale Kamera als helle Flächen dar. Im Gegensatz dazu sind die Bereiche der Auflagefläche, auf denen ein opaker Gegenstand liegt, dunkel.

Die Umrisslinie der Gegenstände ist als Hell-Dunkel-Grenze oder als Farbkontrast zwischen den verschiedenen Bereichen der Auflagefläche auf einem von der mindestens einen Digitalkamera aufgenommenen Bild erkennbar.

In praktischen Anwendungen hat es sich als vorteilhaft erwiesen, wenn die digitalen Kameras und die mindestens eine Lichtquelle oberhalb der Auflagefläche angeordnet sind. Diese Anordnung der Digitalkameras vereinfacht das Positionieren der zu vermessenden Gegenstände auf der Auflagefläche.

Damit die Umrisse der Gegenstände möglichst genau von der digitalen Kamera erfasst werden können, sollte die Kamera relativ weit weg von der Auflagefläche angeordnet werden. Dann ist der Bildwinkel der digitalen Kamera klein und die Genauigkeit der Abbildung der Umriss auf dem Bild der Kamera wird besser. Dieser Zusammenhang bedingt in aller Regel große Bauhöhen. Mit der erfindungsgemäßen Vorrichtung ist es vorteilhaft, wenn mehrere digitale Kameras, bevorzugt zwei, vier oder sechs digitale Kameras, nebeneinander angeordnet sind und jede dieser digitalen Kameras ein Segment der Auflagefläche aufnimmt. Dann können, trotz eines geringen Abstands der Kameras zur Auflagefläche, mit einem kleinen Bildwinkel Bilder von den auf der Auflagefläche befindlichen Gegenständen gemacht werden. Damit ergibt sich, trotz einer geringen Bauhöhe der erfindungsgemäßen Vorrichtung, eine unverändert sehr gute Abbildungsqualität. In der Praxis haben sich Bildwinkel, kleiner als 20°, bevorzugt kleiner als 10° und besonders bevorzugt kleiner als 5°, bewährt.

Als besonders günstig, weil leistungsfähig, und in verschiedensten Ausführungsformen verfügbar, hat es sich erwiesen, wenn die mindestens eine digitale Kamera einen CCD-Sensor und ein Objektiv umfasst. Solche einfachen digitalen Kameras sind sehr kostengünstig auf dem Markt verfügbar und können problemlos in die erfindungsgemäße Vorrichtung integriert werden.

Es hat sich weiter als vorteilhaft erwiesen, wenn eine Hauptaustrittsrichtung des von der mindestens einen Lichtquelle emittierten Lichts orthogonal zu der Auflagefläche und zu der Auflage hin gerichtet ist. Dadurch werden die Verzerrungen der Umrisslinien minimiert.

Auch hier ist es erwünscht, wenn der Kegelwinkel des von der mindestens einen Lichtquelle emittierten Lichts möglichst klein ist. In der Praxis haben sich Kegelwinkel, die kleiner als 20° sind, bevorzugt kleiner als 10° und besonders bevorzugt kleiner als 5° sind, bewährt.

Auch hier ist es möglich, um Bauhöhe zu sparen, dass mehrere, bevorzugt zwei, vier, sechs, neun oder zwölf Lichtquellen, nebeneinander in der Art einer Matrix angeordnet sind, um eine möglichst gleichmäßige Ausleuchtung beziehungsweise Durchleuchtung der transparenten Auflagefläche zu bewirken. Dabei ist auch darauf zu achten, dass das den verschiedenen Lichtquellen ausgesandte Licht möglichst parallel ist.

Damit die erfindungsgemäße Vorrichtung mobil bei einem Kunden vor Ort eingesetzt werden kann, ist erfindungsgemäß vorgesehen, die Lichtquellen, die Auflagefläche und die Kameras in einem mobilen Gestell anzuordnen. Damit ist es möglich, diese Vorrichtung mit einem Lieferwagen zu einem Kunden zu bringen und dort die Werkzeuge und Messmittel und anderen Gegenstände, die in einem Shadowboard oder einer Einlage in einer Schublade aufbewahrt werden sollen, zu erfassen.

Um die Abbildungsqualität bei minimiertem Transportvolumen zu verbessern, ist vorgesehen, dass das Gestell teilweise telekopierbar ist, so dass der Abstand zwischen der Auflageflächen der mindestens einen digitalen Kamera veränderbar ist. Beim Transport wird dann die Bauhöhe minimiert. Wenn die Vorrichtung am Einsatzort angekommen ist, wird das Gestell telekopiert und somit ein größerer Abstand zwischen Kamera und Auflagefläche erreicht.

Die erfindungsgemäße Vorrichtung arbeitet nach folgenden Verfahrensschritten:
Mindestens eine Digitalkamera macht ein Referenzbild von der leeren Auflagenfläche, anschließend werden einer oder mehrere Gegenstände auf die Auflagefläche gelegt und ein zweites Bild von der Auflagenfläche gemacht, in einem dritten Schritt wird das zweite Bild und bei Bedarf auch das erste Bild ausgewertet, um die Umrisslinien der Gegenstände zu erkennen.

Dies kann durch den Vergleich von Referenzbild und zweitem Bild erfolgen. In vielen Fällen reicht es jedoch schon aus, die Hell-Dunkel-Grenzen und/oder die Farbkontraste des zweiten Bilds auszuwerten, um die Umrisslinien der Gegenstände zu erkennen.

Zunächst werden der oder die Gegenstände auf die Auflagefläche gelegt und so positioniert, wie sie später in dem Shadowboard positioniert sein sollen.

Vorher wird die mindestens eine Lichtquelle eingeschaltet und es wird ein Bild erstellt von der beleuchteten Auflagefläche mittels der mindestens einen digitalen Kamera. Danach wird dieses digitale Bild oder die von den mehreren digitalen Kameras gemachten Bilder ausgewertet.

Diese Auswertung kann dahingehend erfolgen, dass zunächst die Bilder aufbereitet werden und anschließend die Hell-Dunkel-Grenzen des oder der Bilder so vektorisiert werden, dass sich ein geschlossener Kurvenzug für jeden auf der Auflagefläche befindlichen Gegenstand ergibt. Diese vektorisierten geschlossenen Kurvenzüge können nun mit Hilfe eines geeigneten Softwareprogramms in eine Bahnsteuerung für eine Bearbeitungseinrichtung, bevorzugt eine Fräseinrichtung, Wasserstrahlschneidmaschine oder einen Plotter, umgesetzt werden.

Die Daten dieser Bahnsteuerung können entweder direkt über eine Signalverbindung an eine geeignete Bearbeitungseinrichtung übertragen werden oder in Form einer Datei abgespeichert werden. Diese Datei kann dann beispielsweise per Internet oder ein Speichermedium an eine geeignete Bearbeitungseinrichtung übertragen werden. Dort werden dann die Konturen der Werkzeuge oder Messmittel ausgefräst oder geschnitten.

Als Ergebnis dieses nahezu vollständig automatisierten Prozesses steht ein Shadowboard zur Verfügung, das individuell und mit größter

Genauigkeit hergestellt ist. Somit ermöglicht dieses Shadowboard eine sehr übersichtliche, sichere und vor Schäden schützende Aufbewahrung von Messmitteln oder Werkzeugen aller Art.

Um die Qualität der Abbildung zu verbessern und gleichzeitig die benötigte Bauhöhe der Vorrichtung zu verringern, ist erfindungsgemäß vorgesehen, dass mehrere Kameras Bilder von Segmenten der Auflagefläche erstellen und dass diese Bilder zu einem Gesamtbild der Auflagefläche zusammengesetzt werden. Weil digitale Kameras sehr preiswert am Markt verfügbar sind, stellt es keinen großen Kostenfaktor dar, wenn anstelle einer digitalen Kamera zwei, vier oder sechs oder sogar mehr Kameras eingesetzt werden.

Alternativ ist es möglich, die Bilder von Segmenten der Auflagefläche vor dem Vektorisieren zu einem Gesamtbild der Auflagefläche zusammenzusetzen. Des Weiteren ist es möglich, dass die Bilder von Segmenten zuerst aufbereitet und die Umrisslinien der auf der Auflagefläche befindlichen Gegenstände zu vektorisieren. Anschließend werden die Kurvenzüge, welche die Umrisslinien darstellen, zusammengesetzt werden. Prinzipiell sind beide Wege möglich.

Wenn mehrere digitale Kameras eingesetzt werden, dann ergeben sich für einen Gegenstand, der von zwei Kameras erfasst wird, aufgrund der unterschiedlichen Position der Kameras relativ zu dem Gegenstand, geringfügig andere Umrisslinien. Diese Unterschiede kann man ausnützen, um eine Korrektur der Verzerrung durchzuführen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Vorteile können sowohl einzeln als auch in beliebiger Kombination miteinander erfindungswesentlich sein.

Es zeigen:
- Figur 1: eine Seitenansicht und eine Draufsicht auf ein erstes Ausführungsbeispiel einer erfindungsgemäßen Vorrichtung, wobei mehrere Kameras oberhalb einer Auflagefläche angeordnet sind;
- Figur 2: ein Ausführungsbeispiel einer erfindungsgemäßen Vorrichtung, bei der eine Kamera unterhalb der Auflagefläche angeordnet ist;
- Figur 3: ein Ausführungsbeispiel einer erfindungsgemäßen Vorrichtung mit mehreren, unterhalb der Auflagefläche angeordneten Kameras;
- Figur 4: den Strahlengang bei Ausführungsformen mit mehreren nebeneinander angeordneten Kameras und
- Figur 5: zeigen die Bildschirmmasken eines realisierten Ausführungsbeispiels des erfindungsgemäßen Verfahrens.

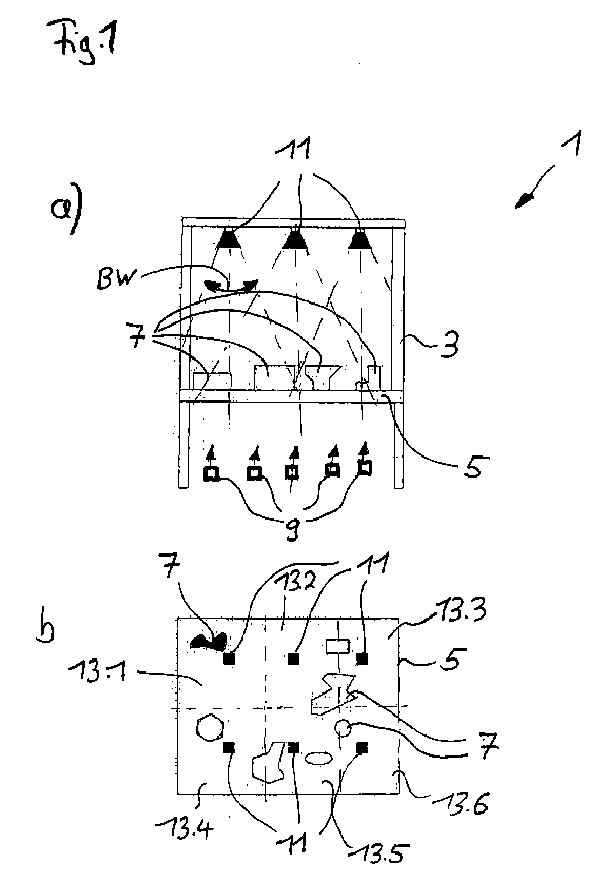

In der Figur 1a ist eine Seitenansicht ein Ausführungsbeispiel einer erfindungsgemäßen Vorrichtung 1 schematisch dargestellt. Die Vorrichtung 1 umfasst ein Gestell 3. In dem Gestell 3 ist eine Auflagefläche 5 aus einem transparenten Werkstoff angeordnet. Die Auflagefläche 5 ist, weil auf ihr bei erfindungsgemäßer Benutzung, verschiedene Gegenstände abgelegt werden sollen, bevorzugt waagerecht oder horizontal ausgerichtet.

Die auf der Auflagefläche 5 befindlichen Gegenstände sind mit dem Bezugszeichen 7 versehen. Es kann sich bei den Gegenständen 7 beispielsweise um Werkzeuge, chirurgische Instrumente, Messmittel, Akkuschrauber und anderes mehr handeln. Grundsätzlich sind alle Gegenstände geeignet, deren Abmessungen so sind, dass sie in das Gestell 3 der Vorrichtung eingebracht werden können und auf der Auflagefläche 5 abgelegt werden können.

Unterhalb der transparenten Auflagefläche 5 sind eine Vielzahl von Lichtquellen 9 angeordnet, die Licht, angedeutet durch Pfeile, in Richtung der Auflagefläche 5 emittieren. Als Lichtquelle 9 können handelsübliche Leuchten, wie zum Beispiel Niedervolt-Halogen-Leuchten, LEDs oder andere Leuchtmittel, eingesetzt werden. Besondere Anforderungen an das Licht werden nicht gestellt. Die Leuchten 9 sollten robust, langlebig und kostengünstig sein.

Oberhalb der transparenten Auflagefläche 5 sind mehrere digitale Kameras 11 nebeneinander angeordnet. Wie sich aus der Draufsicht gemäß Figur 1b ergibt, sind insgesamt 2 x 3 (=6) digitale Kameras 11 in der Art einer Matrix nebeneinander und oberhalb der Auflagefläche 5 angeordnet. Wie man der Draufsicht gemäß Figur 1b entnehmen kann, sind die Gegenstände 7 über die gesamte Fläche der Auflagefläche 5 verteilt angeordnet. Sie können auf der Auflagefläche 5 frei verschoben und so positioniert werden, wie der spätere Benutzer dieser Gegenstände sie in beispielsweise der Schublade seines Werkzeugschranks finden möchte.

In den Figuren 1 bis 4 sind Konstellationen dargestellt, bei denen die Digitalkameras 11 und die Lichtquellen 9 auf entgegengesetzten Seiten der Auflagefläche 5 angeordnet sind.

Das erfindungsgemäße Verfahren kann jedoch auch angewandt werden, wenn die Digitalkameras 11 und die Lichtquellen 9 auf der gleichen Seite der Auflagefläche 5 angeordnet sind. Dann erzeugen die Lichtquellen ein Auflicht. Die Auflagefläche muss dann nicht transparent sein, sondern kann auch opak sein. In vielen Fällen hat es sich als vorteilhaft erwiesen, wenn die Auflagefläche 5 mit einer geeigneten Farbe, wie zum Beispiel blau, eingefärbt wird. Diese Konfigurationen sind nicht in den Figuren dargestellt, weil das erfindungsgemäße Prinzip bei beiden Konfigurationen gleich ist.

In der Draufsicht gemäß Figur 1b ist die Auflagefläche 5 durch strichpunktierte Linien in insgesamt sechs Segmente, entsprechend der Zahl der digitalen Kameras 11, aufgeteilt. Diese Segmente sind in der Figur 1b mit dem Bezugszeichen 13 bezeichnet. In der Figur 1a ist ein Bildwinkel BW der digitalen Kameras 11 durch gestrichelte Linien angedeutet. Aus der Figur 1a wird deutlich, dass der Bildwinkel der digitalen Kameras 11 so gewählt wird, dass es Überschneidungen der von den Kameras 11 aufgenommenen Bilder gibt. Dies heißt, dass eine Kamera 11 nicht nur ein Segment 13 abbildet, sondern auch noch Teile der benachbarten Segmente mit erfasst. Beispielsweise erfasst die Kamera, die zentral über dem Segment 13.2 angeordnet ist, noch Teile der Segmente 13.1, 13.3 und 13.5 mit erfassen. Dadurch ist es möglich, die Bilder, welche die verschiedenen digitalen Kameras 11 aufnehmen, automatisiert zu einem Gesamtbild der Auflagefläche 5 zusammenzufügen.

Durch die erfindungsgemäße Anordnung mehrerer digitaler Kameras 11 ist es bei gleichbleibender Abbildungsgüte möglich, die Kameras 11 näher an der Auflagefläche 5 zu positionieren und dadurch die Bauhöhe der erfindungsgemäßen Vorrichtung 1 zu minimieren.

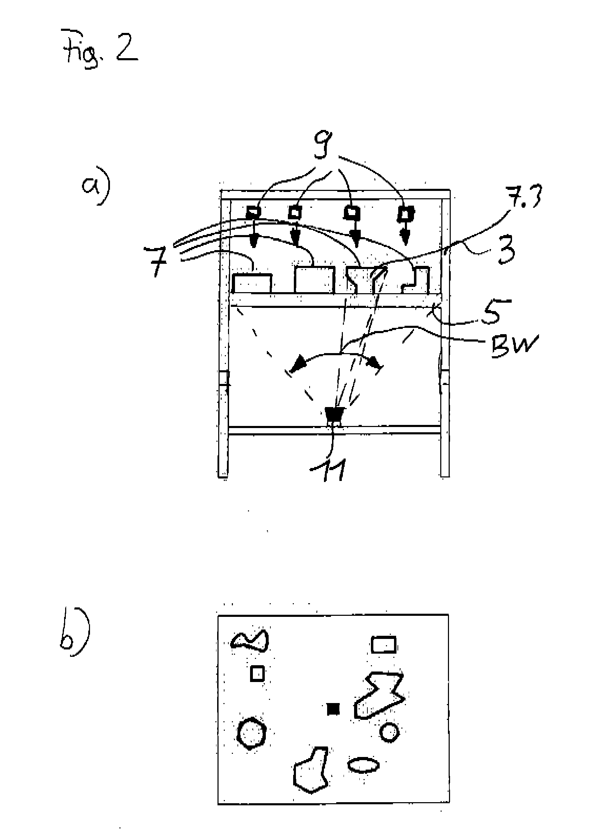

In der Figur 2 ist ein weiteres Ausführungsbeispiel einer erfindungsgemäßen Vorrichtung dargestellt. Wie bei der Figur 1 auch, ist im oberen Teil eine Seitenansicht und im unteren Teil eine Draufsicht dargestellt.

Bei diesem Ausführungsbeispiel ist nur eine Kamera 11 unterhalb der Auflagefläche 5 vorgesehen. Dadurch muss diese einzige Kamera 11 die gesamte Auflagefläche 5 erfassen. Entsprechend ist der Bildwinkel BW größer und es können sich Verzerrungen/Ungenauigkeiten einstellen, wenn die Gegenstände 7 ungünstig geformt sind.

Der in der Figur 2 mit dem Bezugszeichen 7.3 versehene Gegenstand unterscheidet sich von den anderen Gegenständen 7 dadurch, dass er mit einer relativ kleinen Fläche auf der Auflagefläche 5 aufliegt und eine angenähert kegelstumpfförmige Kontur aufweist. Dadurch ist die Umrisslinie dieses Gegenstandes 7.3 mit einem gewissen Abstand von der Auflagefläche 5 größer als die Fläche am "Fuß" des Gegenstands 7.3. Infolgedessen wird die Umrisslinie des Gegenstands 7.3 nicht ganz richtig erfasst. Dieser Effekt ist umso größer, je größer der Bildwinkel der Kamera 11 ist und je weiter der Gegenstand 7 von der Bildmitte entfernt positioniert ist. Daher rührt das Bestreben kleine Bildwinkel mit einer Mehrzahl von Kameras 11 zu realisieren.

In der Figur 2b ist eine Draufsicht auf die Konfiguration des zweiten Ausführungsbeispiels dargestellt.

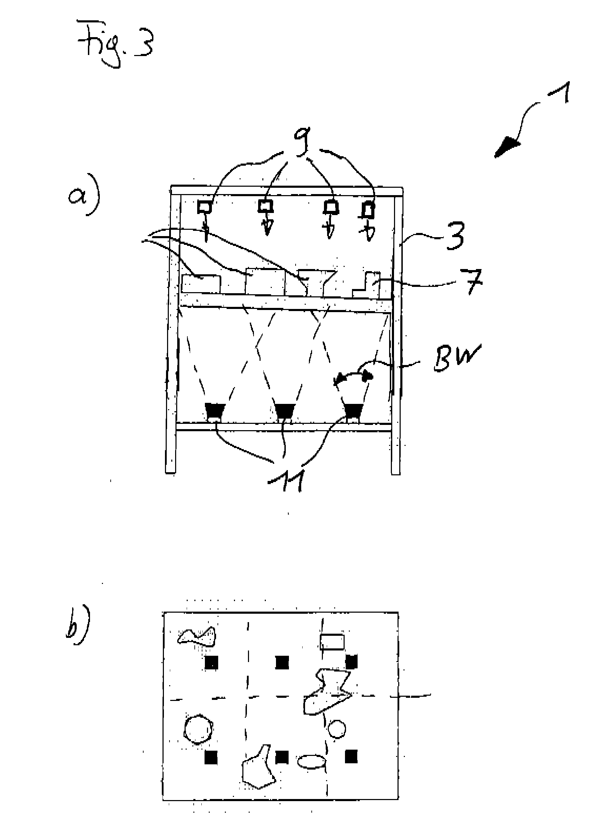

In der Figur 3 ist ein weiteres Ausführungsbeispiel einer erfindungsgemäßen Vorrichtung dargestellt, bei dem insgesamt 2 x 3 Kameras 11 unterhalb der Auflagefläche 5 angeordnet sind. Dadurch kann die Auflagefläche 5 segmentiert werden und von jedem Segment kann eine Kamera 11 ein Bild machen, das anschließend zu einem Gesamtbild zusammengefügt wird.

Wenn man die Ausführungsbeispiele gemäß der Figuren 2 und 3 miteinander vergleicht, wird deutlich, dass mit zunehmender Zahl von digitalen Kameras 11 der Bildwinkel BW kleiner wird und daher Verzerrungen, die sich aufgrund der ungünstigen Geometrie der Gegenstände 7 und deren Positionierung außerhalb von der Bildmitte ergeben können, minimiert werden.

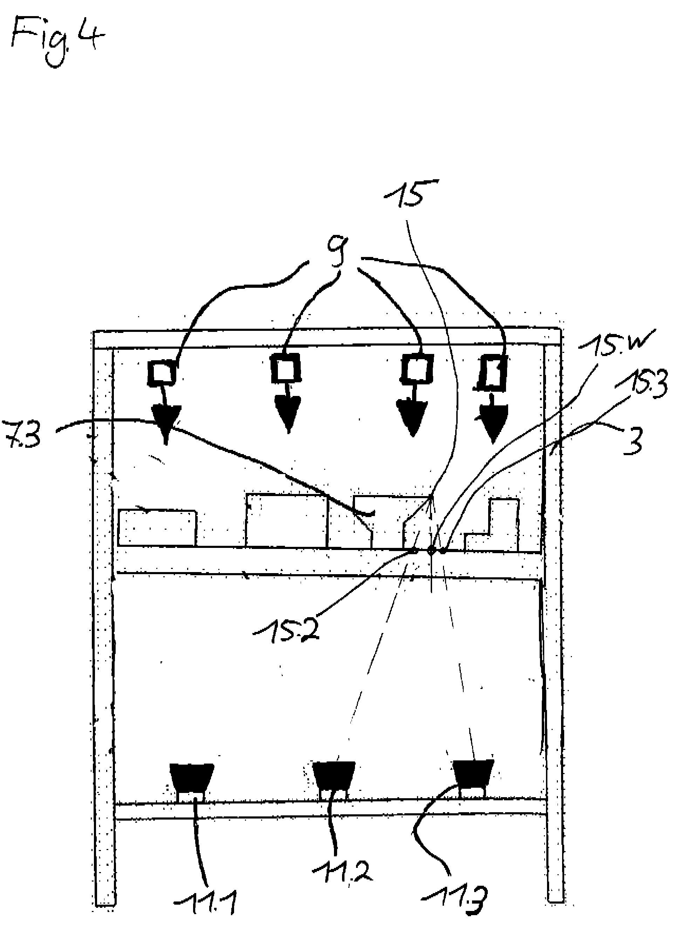

In Figur 4 ist eine Möglichkeit angedeutet, wie am Übergang zwischen zwei Bildsegmenten diese Verzerrung korrigiert werden kann. Die Figur 4 stellt eine Vergrößerung der Figur 3a dar. Wenn man eine Spitze 15 des Gegenstands 7.3 mit Hilfe der Kamera 11.2 abbildet, dann würde aufgrund der ungünstigen geometrischen Verhältnisse ein Punkt 15.2 auf der Auflagefläche 3 abgebildet. Die Kamera 11.3 würde entsprechend einen Punkt 15.3 abbilden. Der für die Erstellung eines shadowboards beste Punkt 15.W auf der Auflagefläche liegt zwischen den beiden von den Kameras 11.2 und 11.3 ermittelten Punkten 15.2 und 15.3.

Mit Hilfe des Ähnlichkeitssatzes oder auch einfach nur durch eine arithmetische Mittlung der beiden Punkte 15.2 und 15.3 kann man eine wesentliche Verbesserung der Qualität erreichen. Somit ist es möglich, durch den Einsatz mehrerer Kameras 11 bei der anschließenden Auswertung der von den Kameras 11 gemachten Bilder von Segmenten oder Bereichen der Auflagefläche 5 eine Korrektur durch den Vergleich entsprechender Bildpunkte durchzuführen und dadurch die Abbildungsqualität zu verbessern.

Dadurch werden auch die Umrisslinien exakter erfasst und die Qualität der mit Hilfe des erfindungsgemäßen Verfahrens angefertigten Shadowboards werden verbessert.

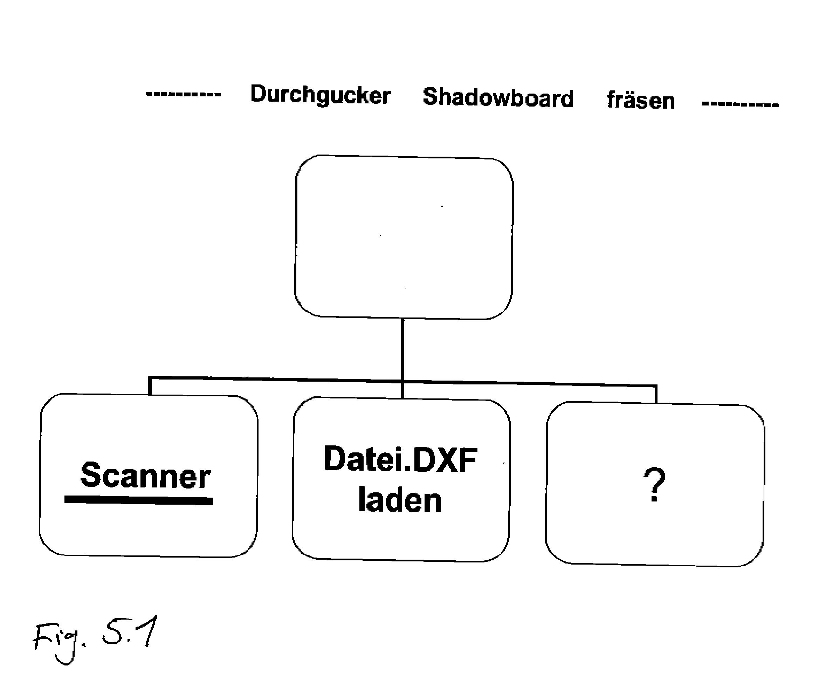

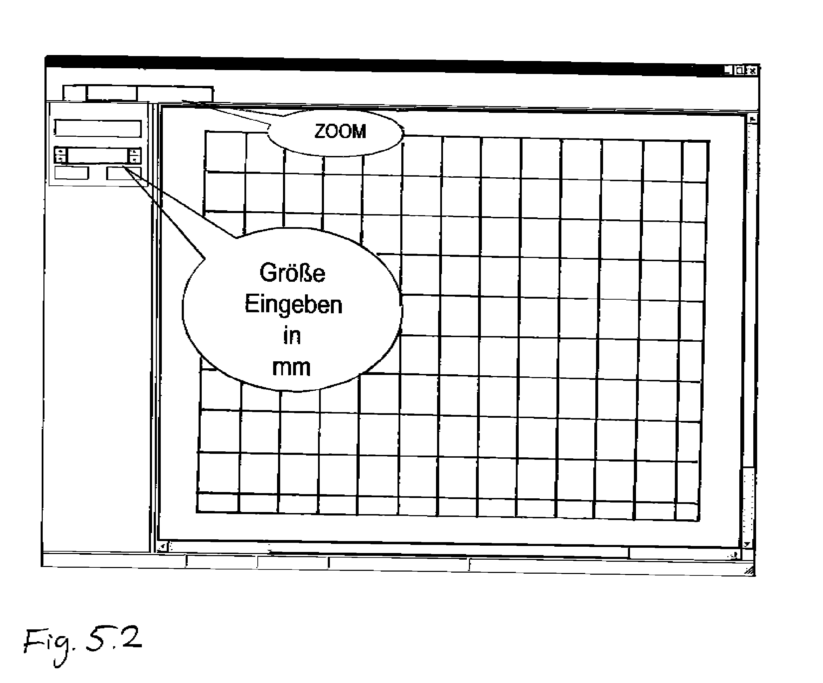

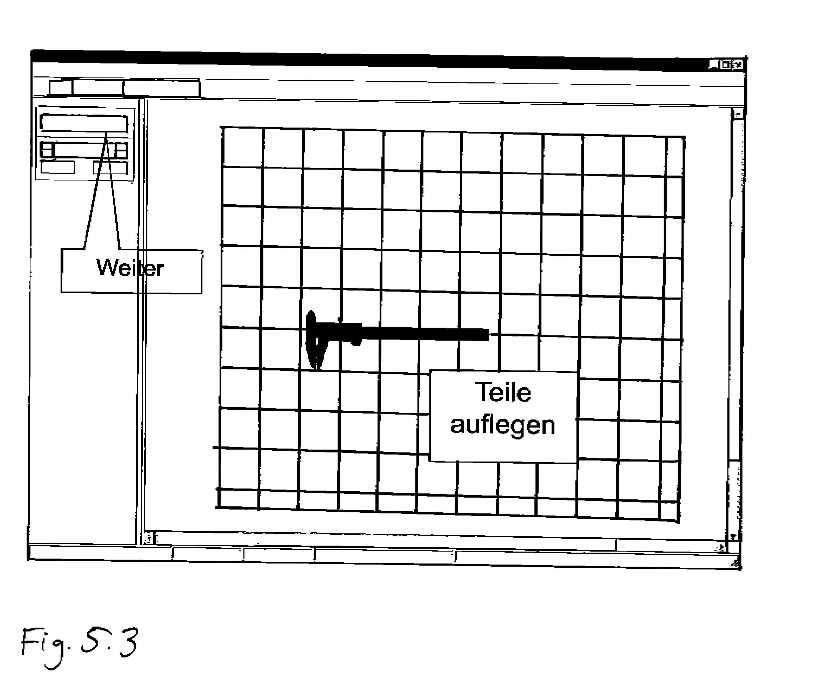

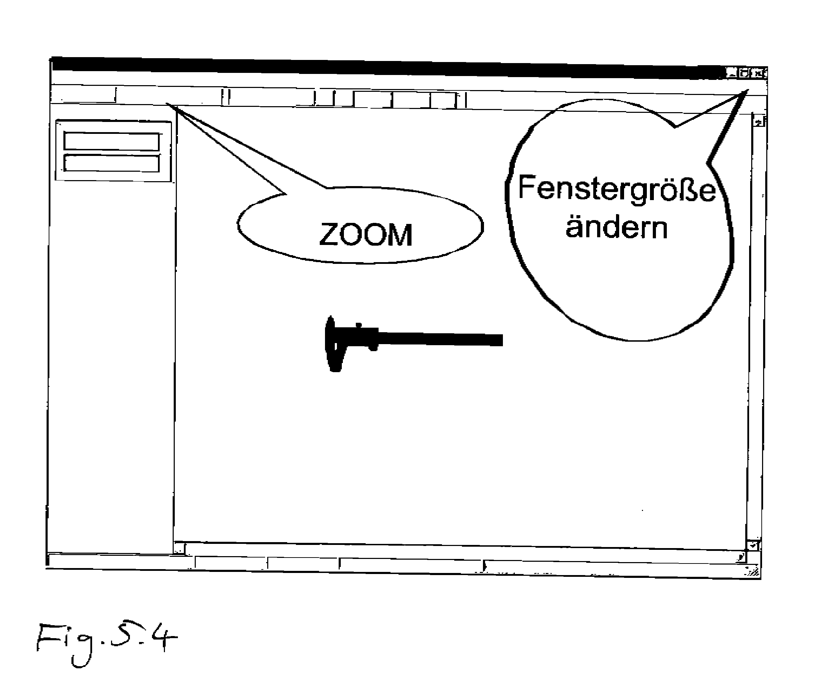

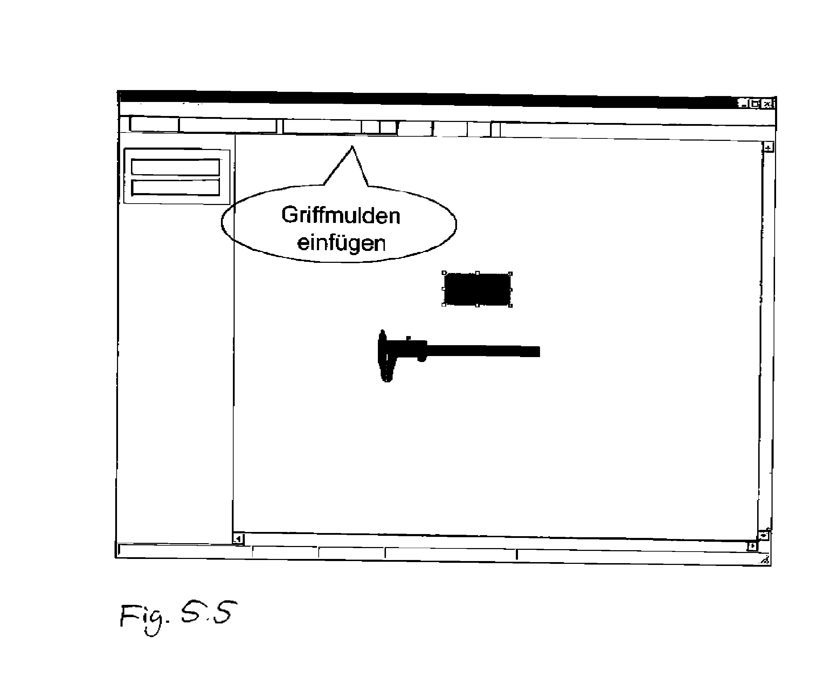

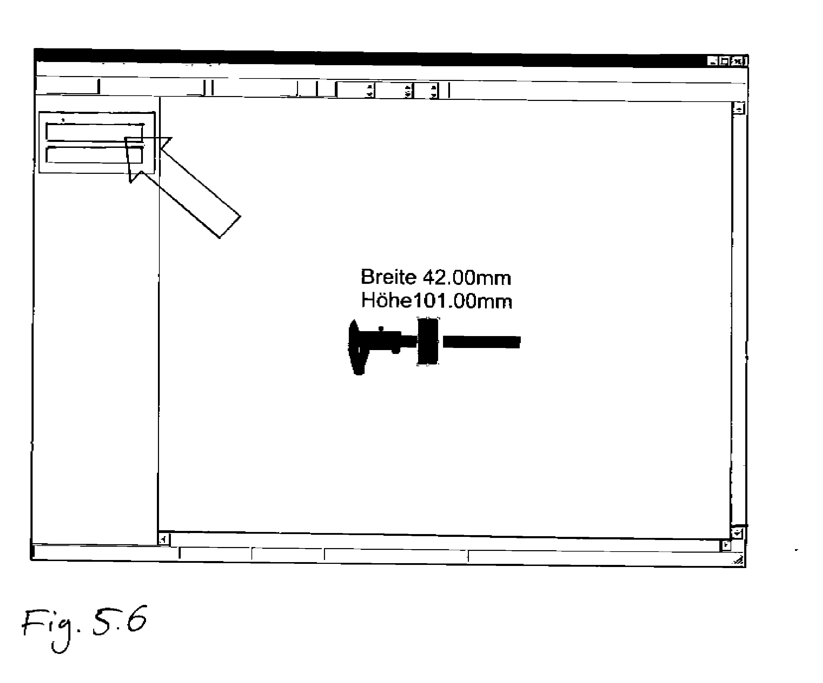

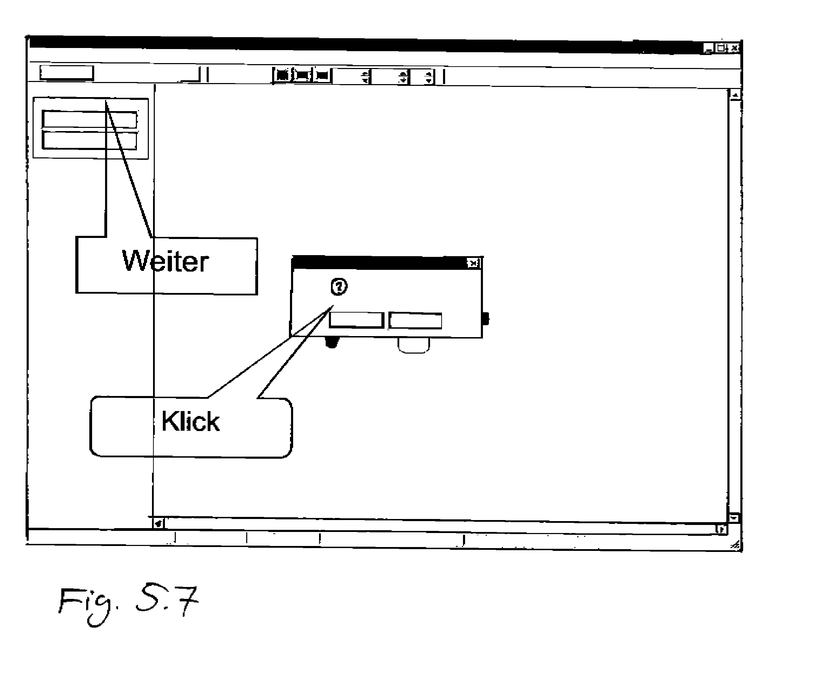

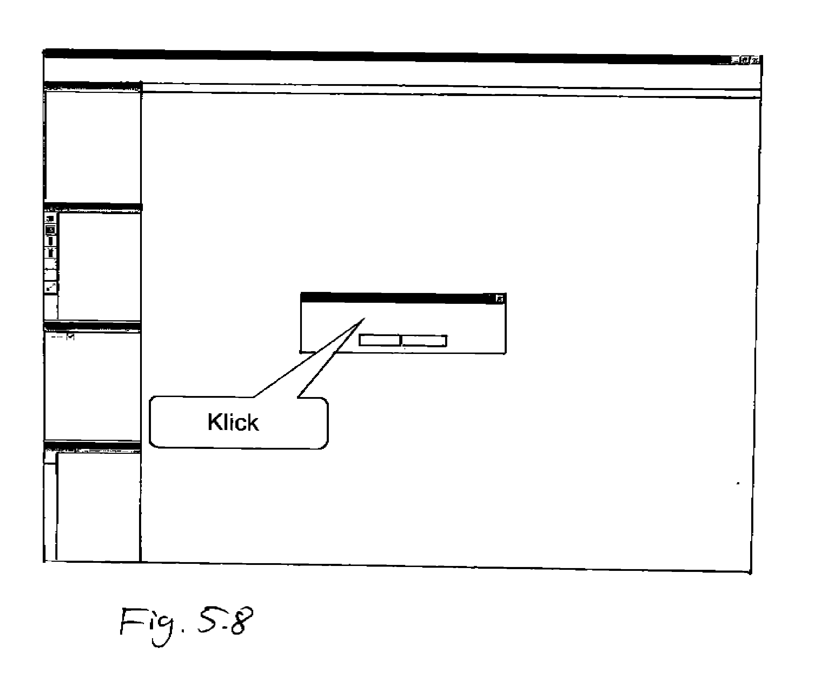

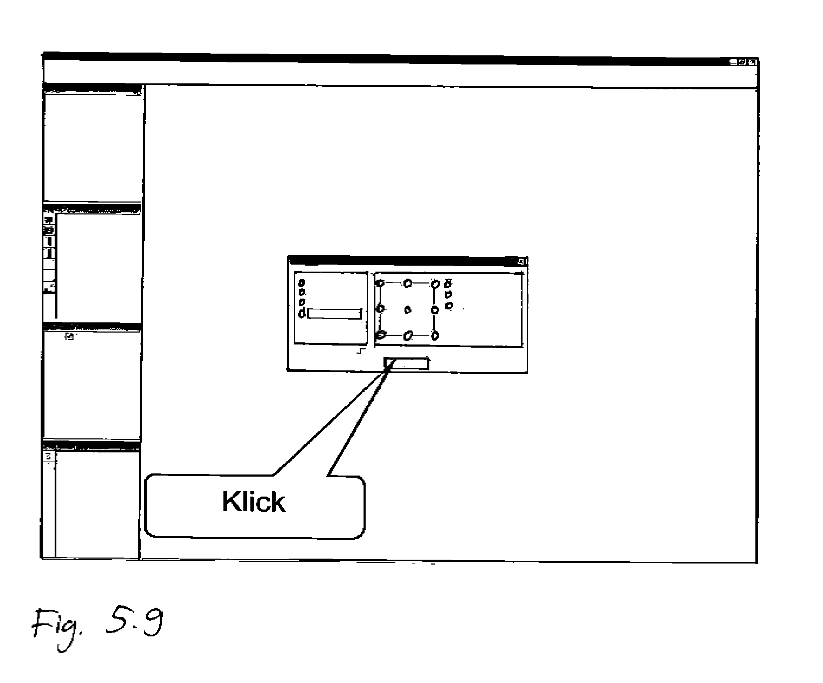

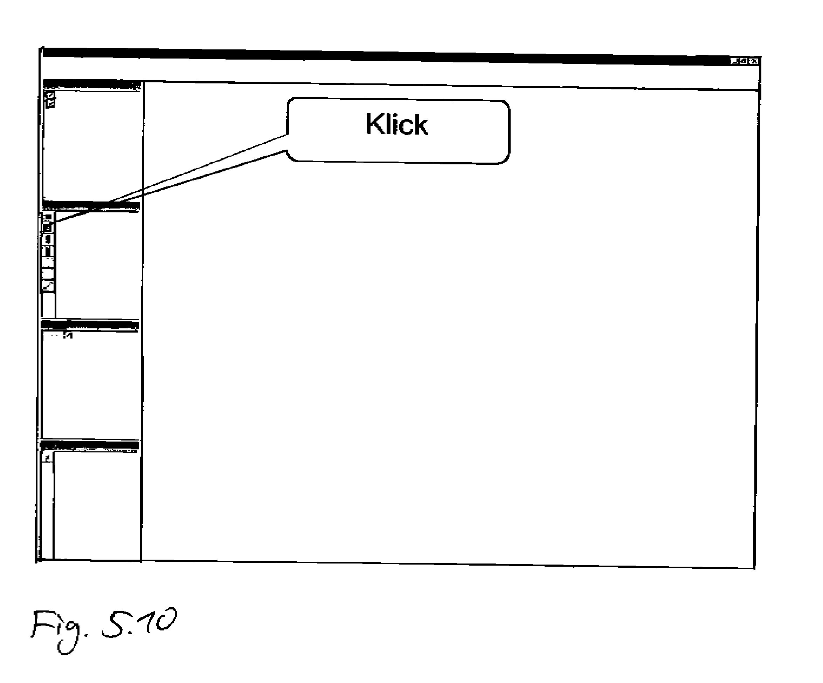

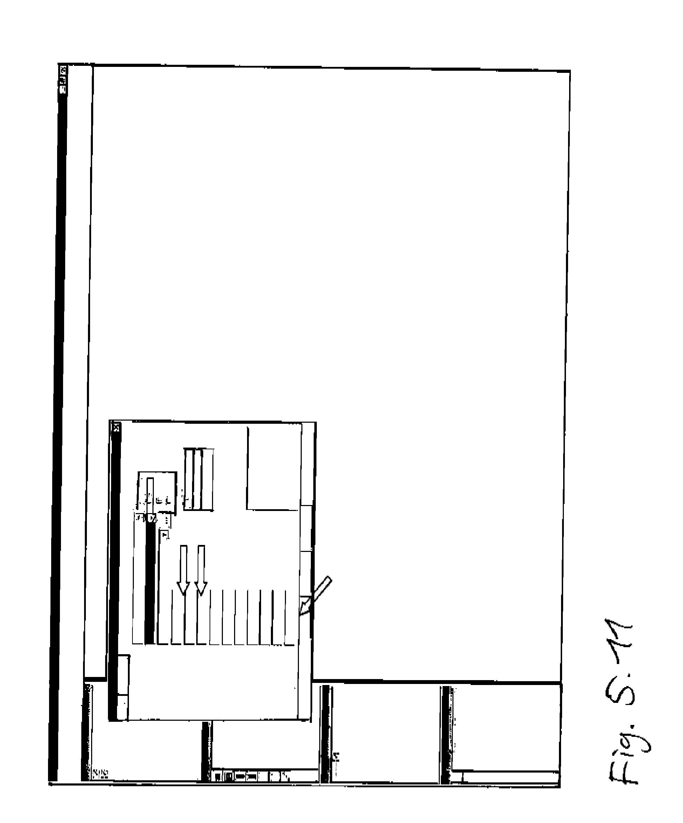

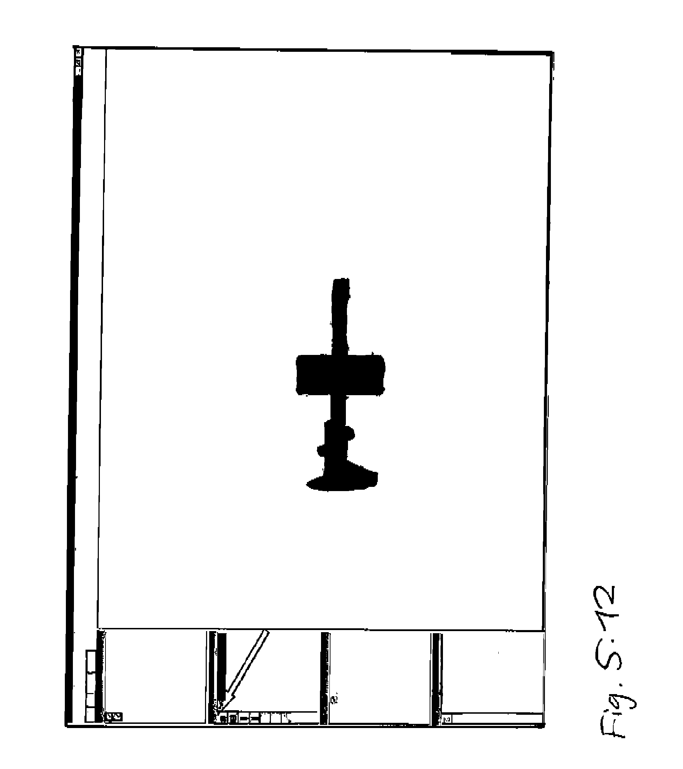

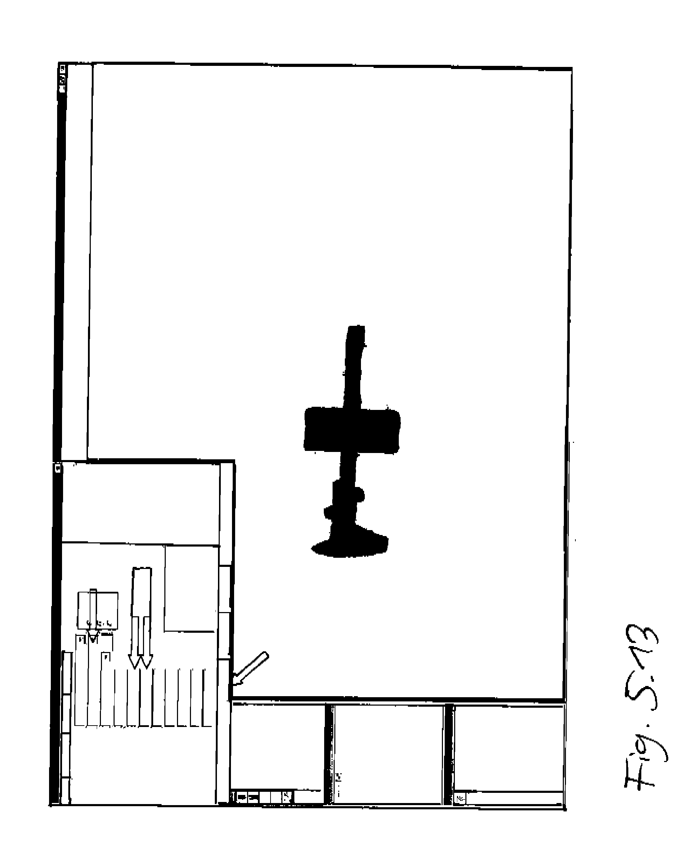

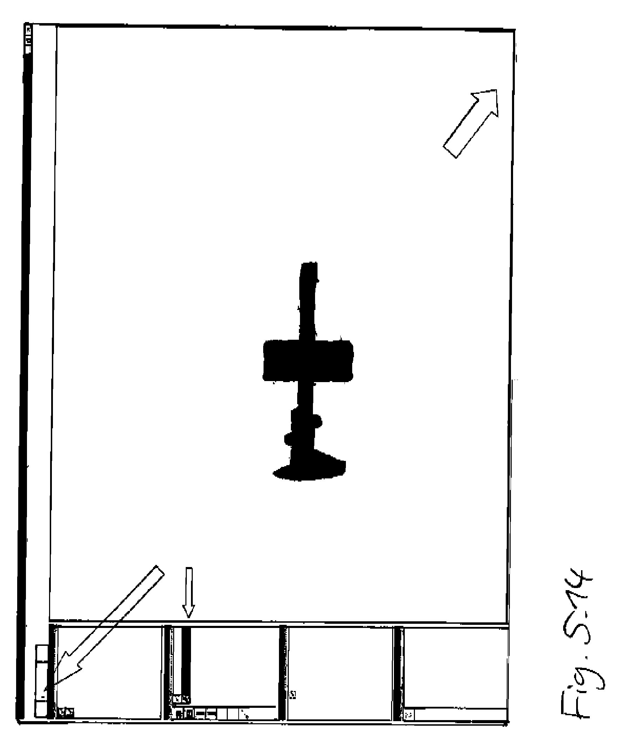

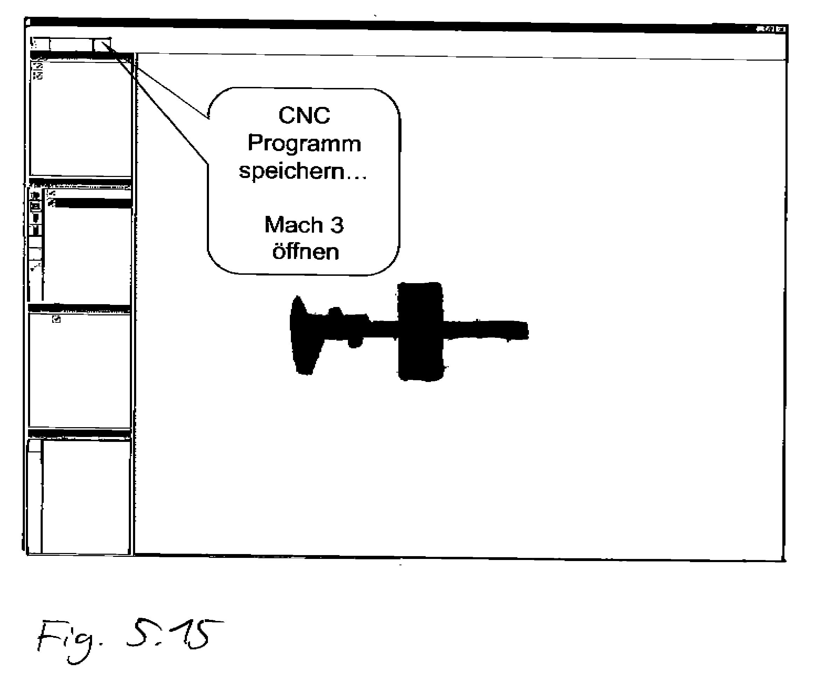

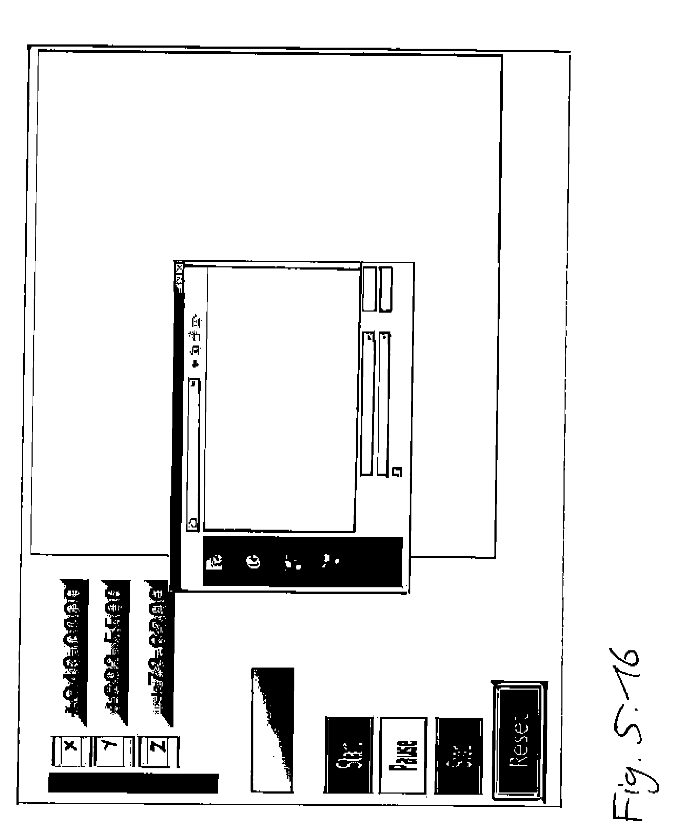

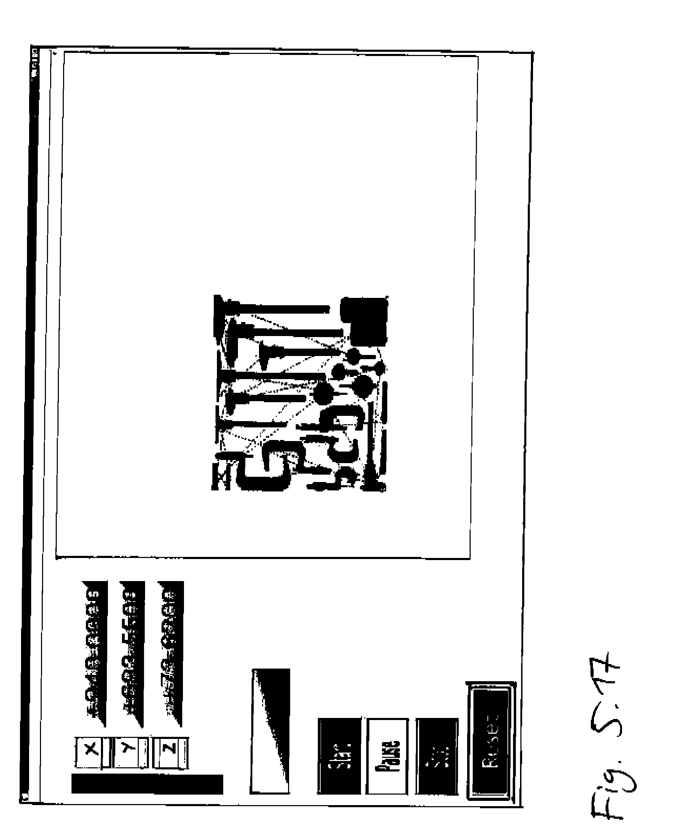

Die Figuren 5 zeigen die Bildschirmmasken eines realisierten Ausführungsbeispiels des erfindungsgemäßen Verfahrens.

## Patentansprüche

1. Vorrichtung zum Erfassen von Gegenstandsumrissen, wie Messmittel- und Werkzeugumrisse, zum Herstellen von Shadowboards oder Einlagen, auf den die Außenkonturen der Gegenstände (7) ausgeschnitten sind, so dass sich Vertiefungen ergeben, in welche die Gegenstände passgenau eingesetzt werden können, umfassend eine transparente Auflagefläche (5), eine digitale Kamera (11), die auf die Auflagefläche (5) gerichtet ist, und einer Lichtquelle (9) zum Beleuchten der Auflagefläche (5), wobei die Lichtquelle (9) und die digitale Kamera (11) auf entgegengesetzten Seiten oder auf der gleichen Seite der Auflagefläche (5) angeordnet sind,
- **dadurch gekennzeichnet, dass**
- mehrere, bevorzugt 2, 4 oder 6, digitale Kameras (11) nebeneinander angeordnet sind, und dass die Bildausschnitte der Kameras (11) aneinander anschließen oder sich teilweise überlappen,
- die transparente Auflagefläche (5), die Lichtquelle (9) und die digitalen Kameras (11) in einem gemeinsamen mobilen Gestell (3) angeordnet sind,
- das Gestell (3) teilweise teleskopierbar ist, so dass der Abstand zwischen der transparenten Auflagefläche (5) und den digitalen Kameras (11) veränderbar ist, wobei die Vorrichtung zusätzlich so ausgebildet ist, dass
- die mehreren Kameras (11) Bilder von Segmenten (13.1 bis 13.6) der Auflagefläche (5) erstellen, und dass diese Bilder zu einem Gesamt-Bild der Auflagefläche (5) zusammengesetzt werden,
- die Hell-Dunkel-Grenzen der Bilder von der Auflagefläche (5) mit darauf liegenden Gegenständen (7) so vektorisiert werden, dass sich ein geschlossener Kurvenzug für jeden auf der Auflagefläche (5) befindlichen Gegenstand (7) ergibt,
- die vektorisierten geschlossenen Kurvenzüge in eine Bahnsteuerung für eine Bearbeitungseinrichtung, bevorzugt eine Fräseinrichtung oder einen Plotter, umgesetzt werden, wobei die Daten dieser Bahnsteuerung entweder direkt übereine Signalverbindung an eine geeignete Bearbeitungseinrichtung übertragbar oder in Form einer Datei speicherbar sind.

2. Vorrichtung nach Anspruch 1,
- **dadurch gekennzeichnet, dass**
- die digitalen Kameras (11) jeweils einen CCD-Sensor und ein Objektiv umfassen.

3. Vorrichtung nach einem der vorhergehenden Ansprüche,
- **dadurch gekennzeichnet, dass**
- eine Hauptaustrittsrichtung des von der mindestens einen Lichtquelle (9) emittierten Lichts orthogonal zu der Auflagefläche (5) und zu der Auflagefläche (5) hin gerichtet ist.

4. Vorrichtung nach einem der vorhergehenden Ansprüche,
- **dadurch gekennzeichnet, dass**
- ein Kegelwinkel des von der mindestens einen Lichtquelle (9) emittierten Lichts kleiner als 20° ist, bevorzugt kleiner als 10° ist und besonders bevorzugt kleiner ab 5° ist.

5. Vorrichtung nach einem der vorhergehenden Ansprüche,
- **dadurch gekennzeichnet, dass**
- mehrere, bevorzugt 4 oder 6, Lichtquellen (9) nebeneinander angeordnet sind, und dass die Hauptaustrittsrichtungen der Lichtquellen (9) parallel zueinander verlaufen.

6. Vorrichtung nach einem der vorhergehenden Ansprüche,
- **dadurch gekennzeichnet, dass**
- die Auflagefläche (5) waagerecht angeordnet ist.

7. Vorrichtung nach einem der vorhergehenden Ansprüche,
- **dadurch gekennzeichnet, dass**
- die Vorrichtung so ausgebildet ist, dass durch mehrere Kameras (11) die Bilder von Segmenten (13.1 bis 13.6) der Auflagefläche (5) vor dem Vektorisieren zu einem Gesamt-Bild der Auflagefläche (5) zusammengesetzt werden.

8. Vorrichtung nach einem der vorhergehenden Ansprüche,
- **dadurch gekennzeichnet, dass**
- die Vorrichtung so ausgebildet ist, dass zuerst die Bilder von Segmenten (13.1 bis 13.6) der Auflagefläche (5) vektorisiert werden, und dass anschließend die geschlossenen Kurvenzüge zu einem Gesamt-Bild der Auflagefläche (5) zusammengesetzt werden, das einen Kurvenzug für jeden auf der Auflagefläche (5) befindlichen Gegenstand (7) enthält.

9. Vorrichtung nach einem der vorhergehenden Ansprüche,
- **dadurch gekennzeichnet, dass**
- der Bildwinkel der Kameras kleiner als 20° ist, bevorzugt kleiner als 10° ist und besonders bevorzugt kleiner als 5° ist.

## Claims

1. Apparatus for capturing object outlines, such as measuring instrument and tool outlines, for manufacturing shadow boards or inserts on which the outer contours of the object (7) are cut out, such that recesses are formed into which the objects can be placed with an exact fit, comprising a transparent placement surface (5), a digital camera (11) aimed at the placement surface (5), and a light source (9) for illuminating the placement surface (5), wherein the light source (9) and the digital camera (11) are located at opposite sides or on the same side of the placement surface (5),
- **characterized in that**
- a plurality of, preferably 2, 4 or 6, digital cameras (11) are arranged next to one another and **in that** the image sections of the cameras (11) adjoin one another or at least partially overlap,
- the transparent placement surface (5), the light source (9) and the digital cameras (11) are arranged in a common mobile frame (3),
- the frame (3) is partially telescopic, such that the distance between the transparent placement surface (5) and the digital cameras (11) is variable, wherein the apparatus is in principle configured such that
- the plurality of cameras (11) take images of segments (13.1 to 13.6) of the placement surface (5), and **in that** these images are assembled to form a total image of the placement surface (5),
- the light-dark boundaries of the images of the placement surface (5) having objects (7) located thereon are vectorized such that the result is a closed curved line for each object (7) located on the placement surface (5),
- the vectorized closed curved lines are converted into a path control for a machining device, preferably a milling machine or a plotter, wherein the data of said path control is transmittable either directly via a signal link to a suitable machining device or can be stored in the form of a file.

2. Apparatus according to Claim 1,
- **characterized in that**
- the digital cameras (11) comprise in each case a CCD sensor and an objective.

3. Apparatus according to one of the preceding claims,
- **characterized in that**
- a main exit direction of the light emitted by the at least one light source (9) is oriented orthogonally to the placement surface (5) and towards the placement surface (5).

4. Apparatus according to one of the preceding claims,
- **characterized in that**
- a cone angle of the light emitted by the at least one light source (9) is less than 20°, preferably less than 10° and with particular preference less than 5°.

5. Apparatus according to one of the preceding claims,
- **characterized in that**
- a plurality of, preferably 4 or 6, light sources (9) are arranged next to one another, and **in that** the main exit directions of the light sources (9) extend parallel with respect to one another.

6. Apparatus according to one of the preceding claims,
- **characterized in that**
- the placement surface (5) is arranged horizontally.

7. Apparatus according to one of the preceding claims,
- **characterized in that**
- the apparatus is configured such that by a plurality of cameras (11) the images of segments (13.1 to 13.6) of the placement surface (5) are assembled into a total image of the placement surface (5) before vectorization.

8. Apparatus according to one of the preceding claims,
- **characterized in that**
- the apparatus is configured such that first, the images of segments (13.1 to 13.6) of the placement surface (5) are vectorized, and **in that** subsequently the closed curves are assembled into a total image of the placement surface (5) which contains one curved line for each object (7) that is located on the placement surface (5).

9. Apparatus according to one of the preceding claims,
- **characterized in that**
- the viewing angle of the cameras is less than 20°, preferably less than 10° and with particular preference less than 5°.

## Revendications

1. Dispositif de détection de contours d'objets tels que des contours de moyens de mesure et d'outils, destiné à fabriquer des écrans opaques ou des pièces d'insertion, sur lesquels sont découpés les contours extérieurs des objets (7) de manière à former des cavités dans lesquelles les objets peuvent être introduits de façon ajustée, comprenant une surface d'appui (5) transparente, une caméra numérique (11) qui est dirigée vers la surface d'appui (5) et une source de lumière (9) destinée à éclairer la surface d'appui (5), dans lequel la source de lumière (9) et la caméra numérique (11) sont disposées sur des côtés opposés ou sur le même côté de la surface d'appui (5),
- **caractérisé en ce qu'**il est prévu
- plusieurs caméras numériques (11), de préférence 2, 4 ou 6, et **en ce que** les sections d'images des caméras (11) sont contiguës les unes aux autres ou se chevauchent partiellement,
- la surface d'appui transparente (5), la source de lumière (9) et les caméras numériques (11) sont disposées dans un bâti (3) mobile commun,
- le bâti (3) est partiellement télescopique de manière à ce que la distance entre la surface d'appui transparente (5) et les caméras numériques (11) puisse être modifiée, dans lequel le dispositif est en outre conçu de telle sorte que
- les multiples caméras (11) créent des images de segments (13.1 à 13.6) de la surface d'appui (5) et lesdites images sont combinées en une image globale de la surface d'appui (5),
- les limites clair-obscur des images de la surface d'appui (5) sur laquelle se trouvent des objets (7) sont vectorisées pour produire une courbe fermée pour chaque objet (7) se trouvant sur la surface d'appui (5),
- les courbes fermées vectorisées sont converties en une commande de trajet pour un dispositif de traitement, de préférence un dispositif de fraisage ou un traceur, dans lequel les données de ladite commande de trajet peuvent soit être directement transmises par l'intermédiaire d'une liaison de signal à un dispositif de traitement approprié soit sous stockées la forme d'un fichier.

2. Dispositif selon la revendication 1,
- **caractérisé en ce que** les caméras numériques (11) comprennent respectivement un capteur à CCD et un objectif.

3. Dispositif selon l'une quelconque des revendications précédentes,
- **caractérisé en ce qu'**une direction de sortie principale de la lumière émise par l'au moins une source de lumière (9) est orientée perpendiculairement à la surface d'appui (5) et vers la surface d'appui (5).

4. Dispositif selon l'une quelconque des revendications précédentes,
- **caractérisé en ce qu'**un angle de cône de la lumière émise par l'au moins une source de lumière (9) est inférieur à 20°, de préférence inférieur à 10° et de façon particulièrement préférable, inférieur à 5°.

5. Dispositif selon l'une quelconque des revendications précédentes,
- **caractérisé en ce qu'**une pluralité de sources de lumière (9), de préférence 4 ou 6, sont disposées côte à côte, et **en ce que** les directions de sortie principales des sources de lumière (9) sont orientées parallèlement les unes aux autres.

6. Dispositif selon l'une quelconque des revendications précédentes,
- **caractérisé en ce que** la surface d'appui (5) est disposée horizontalement.

7. Dispositif selon l'une quelconque des revendications précédentes,
- **caractérisé en ce que** le dispositif est conçu de manière à ce que de multiples caméras (11), avant la vectorisation, les images de segments (13.1 à 13.6) de la surface d'appui (5) sont combinés en une image globale de la surface d'appui.

8. Dispositif selon l'une quelconque des revendications précédentes,
- **caractérisé en ce que** le dispositif est conçu pour vectoriser en premier lieu les images de segments (13.1 à 13.6) de la surface d'appui (5) et pour combiner ensuite les courbes fermées en une image globale de la surface d'appui (5) qui contient une courbe pour chaque objet (7) se trouvant sur la surface d'appui (5).

9. Dispositif selon l'une quelconque des revendications précédentes,
- **caractérisé en ce que** l'angle d'image de la caméra est inférieur à 20°, de préférence inférieur à 10° et de façon particulièrement préférable, inférieur à 5°.
